Europäisches Patentamt

**European Patent Office**

**Office européen des brevets**

(11) Publication number: **0 038 679**
**A1**

## EUROPEAN PATENT APPLICATION

(21) Application number: **81301677.1**

(22) Date of filing: **15.04.81**

(51) Int. Cl.³: **H 01 B 1/20**

(30) Priority: **17.04.80 US 141092**

(43) Date of publication of application:
**28.10.81 Bulletin 81/43**

(84) Designated Contracting States:
**BE DE FR GB IT NL**

(71) Applicant: **W.R. GRACE & CO.**
**62 Whittemore Avenue**
**Cambridge Massachusetts 02140(US)**

(72) Inventor: **Holdsworth, Robert Sehon**
**69 Falmouth Road**
**Arlington Massachusetts 02174(US)**

(74) Representative: **Collier, Jeremy Austin Grey et al,**
**J.A.Kemp & Co. 14, South Square Gray's Inn**
**London WC1R 5EU(GB)**

(54) Electrically conductive plastics compositions.

(57) Electrically conductive seals, especially gaskets are made from a composition comprising (1) a halogenated plastic, especially a polyvinyl chloride plastisol resin, (2) electrically conductive particles, especially nickel, carbon, platinum, chromium, zinc, iron, titanium, cobalt, aluminum and mixtures and alloys thereof and preferably free of silver and gold, and (3) a material chosen from zinc, zinc compounds, amides and amines and mixtures thereof, especially zinc salts or polyamides. The composition is formed by a first stage heating of a plastisol to flux the filled plastisol and a second stage heating of the fluxed plastisol to bring about an increase in the electrical conductivity.

EP 0 038 679 A1

Croydon Printing Company Ltd.

- 1 -

## DESCRIPTION

"ELECTRICALLY CONDUCTIVE PLASTICS COMPOSITIONS".

This invention relates to electrically conductive plastics compositions especially useful for making seals.

In the past it has been the practice to provide electrically conductive shielding and sealing plastic gaskets by filling a plastic with metal particles such as particles of silver, gold, aluminium, nickel, lead, zinc, cadmium, copper, iron and particles coated with silver and gold. The plastic matrix could be an elastomer or other form-stable plastic binder such as a polyvinyl chloride plastisol. Such electrically conductive shielding and sealing plastic gaskets are shown in U.S. Patent 3,140,342. A number of additional electrically conducting materials including caulking materials, adhesives, coatings and preformed gasketing materials which contain nickel or silver or carbon or silver-coated copper particles in a plastic matrix are commercially available from the Emerson & Cuming Division of W.R. Grace & Co. Metal and carbon filled plastics are also marketed by other companies.

In the past such electrically conductive shielding and sealing plastic materials included electrically conductive particles to form the conductive element within the plastic composition. As far as is known the electrically conductive particles functioned basically in the form in which they were introduced into the plastic matrix.

The present invention provides compositions especially useful as a sealant material having good electrical conductivity properties using base metal particles rather than the noble metal particles (silver

BAD ORIGINAL

0038679

- 2 -

and gold) which were previously used where high electrical conductivity was required. The new sealant can provide a hermetically tight seal, and can be · expeditiously formed into electrically conductive gaskets.

The present invention provides compositions comprising about 5 to about 99% by volume of halogenated plastic, about 1 to about 95% by volume of electrically conductive particles and about 0.001 to about 30% by volume of material chosen from zinc, zinc compounds, amide and amine compounds and mixtures thereof, with the proviso that the said electrically conductive particles can be the same as the said material. The electrically conductive particles are preferably chosen from nickel, platinum, chromium, zinc, iron, titanium, cobalt, aluminium, carbon and mixtures thereof. The composition is preferably free of noble metals (silver and gold). When the composition is cured its electrical resistance falls very substantially and is typically less than one fiftieth of the resistance before curing.

The invention in a preferred aspect provides an excellent sealant and more particularly a gasket.

The halogenated plastic is preferably a plastisol. The curing treatment then includes a first curing stage of fluxing the plastisol and a second curing stage of further heating which at least doubles the electrical conductivity. The composition may be heated for 15 minutes to 5 hours at about 150 to about 350°C.

The compositions of the invention comprise:
1.	5 to 99% by volume of halogenated plastic,
2.	1 to 95% by volume of electrically conductive particles, and
3.	0.001 to 30% by volume of material chosen from zinc, zinc compounds and amide compounds and mixtures thereof. *

*If zinc particles are used then material 3. is not
required because zinc is the primary characterizing
material in the zinc compound. However, zinc
particles have the disadvantage of producing an
extreme activity that is hard to properly control
to prevent, for example, embrittlement of the seal.

The compounds for reasons not entirely
understood, which reasons will be further discussed later
in this application, enhance the electrical conductive
and RF shielding properties of the sealant.

The halogenated plastic is preferably present
in an amount of 20 to 97, more preferably 40 to 95 and
most preferably 50 to 90 percent by volume of the solids
and liquids in the cured or the uncured sealant composition.
Examples of typical halogenated plastic are the
halogenated resins especially the vinyl chlorides
including copolymers such as vinyl chloride/vinyl
acetate copolymers and vinyl chloride/vinylidene chloride
copolymers and the vinylidene chlorides. The vinyl resins
are preferred and the polyvinyl chloride resins are the
preferred halogenated vinyl resins. It is especially
preferred to include at least some mass polymerized
polyvinyl chloride resin. The preferred halogen is the
halogenated resin consisting essentially of halogen
chosen from the group consisting of chlorine and bromine.

It is also possible to use a non-halogenated
resin as a second resin. An example of such a resin is
polymethyl methacrylate and its copolymers.

The most preferred halogenated resin class
is the plastisol and preferably plastisols having from
20 to 65, more preferably 30 to 60% by weight of mass
polymerized polyvinyl chloride resin based on the total
combined halogenated resin weight excluding the plasticizers.

- 4 -

The preferred plastisols have a plasticizer content of 25 to 85, more preferably 30 to 80, and most preferably 40 to 75% by weight based on the total plastisol weight. Examples of typical plasticizers are butyl, hexyl, octyl, decyl, and dodecyl esters of phthalic, trimellitic, adipic and phosphoric acids, citrate esters and the sulfonamides. Epoxidized oil plasticizers tend to interfere with the reaction that improves the electrical conductivity of the sealant and thus are generally not preferred although if employed in proper combination they can be useful in some limited instances.

The electrically conductive particle, that is the portion of the sealant made up of electrically conductive particles, is preferably present in an amount of about 2 to 80, more preferably 5 to 60 and most preferably 10 to 50 percent by volume of the solids and liquids in the cured or the uncured sealant. Examples of typical electrically conductive particulate material or substances are silver, gold, nickel, platinum, chromium, zinc, iron, titanium, cobalt, aluminium and carbon. Of course, alloys and stratified or coated particles combining electrically conductive substances or alloys of such substances or combinations of them with non-electrically conductive substances and also hollow particle substances are also useful and in some cases offer considerable cost savings.

Because of the present expense of materials such as silver, one of the features of the present invention is the ability to obtain electrical conductivity in the sealant that is equal to the present standard in the industry, silver, using a base metal such as nickel. Thus it is presently preferred that the electrically conductive particle portion of the sealant be free of silver. The preferred electrically conducting particle

- 5 -

materials are the metallic particles and particularly particles of zinc and nickel and their alloys and particles coated with zinc and nickel and their alloys.

The material which promotes the resin/filler reaction chosen from the group consisting of zinc, zinc compounds and amide and amine compounds and mixtures thereof is preferably present in an amount of 0.005 to 20, more preferably 0.01 to 15 and most preferably 0.02 to 10 percent by volume of the solids and liquids in the cured or the uncured sealant. The preferred amide and amine compounds are the amide compounds. Examples of typical amides are the preferred polyamides, the amidoamines and, particularly the reaction products of polyamines, especially the reaction products of aliphatic dimer acids with polyamines.

Examples of typical zinc compounds are the zinc salts, for example zinc oxide, zinc chloride, zinc acetate, zinc sulfate, zinc bromide and especially the zinc salts of various organic acids. Particularly preferred zinc compounds are zinc oxide, zinc sulfate and zinc stearate and the most preferred is zinc stearate. The zinc compounds are preferred to the amides in most instances.

Zinc particles can have a dual functionality in the present invention and would be preferred in many instances except for the requirement that the process be carried out under restricting conditions in the combinations tried to date. In order to get good distribution using zinc particles, the particles are so small as to be considered powders in the present preferred embodiments.

Of course, combinations of the above materials can be used to advantage in many instances. All of this allows for the tailoring of sealants that have properties never before possible.

The nature of the finished sealant is also a function of the curing conditions and particularly the curing temperature. This relates to how much activity is provided by the material which promotes the resin/filler reaction. In general if the cure is above 170°C a puffed sealant results. At 160°C and below, a solid sealant results. In general a solid, noncellular, gasket is preferred.

A method for forming a seal from the aforesaid compositions is also provided by the present invention. The method can be employed in proper instances to form the seal in situ but is expected to be more generally applied to preparing preformed electrically conductive gaskets.

The method involves the chemical curing of the composition until its electrical conductivity is at least doubled. This curing is preferably done by heating. In its more preferred form the method employs a plastisol and the heating proceeds in two steps with the first step or curing stage bringing about a fluxing of the plastisol to a gelled solid state where it is rubber-like in nature. Subsequent heating in a second step or curing stage at least doubles the electrical conductivity. It is important in forming superior gasketing and sealant materials to regulate the temperatures employed, particularly in the second stage in balance with time and specific selection of ingredients so that the rubber-like properties of the gasket are present in the finished product. It is in this regulation of the second stage that the selection of the preferred zinc salts appears to be important to the retention of a significant degree of the rubber-like properties of fluxed plastisol. Thus zinc oxide, zinc sulfate and zinc stearate have given the best results with zinc stearate being preferred.

It is preferred that the first stage cure be by heating the composition for from 1 to 40 minutes, at a temperature between 100 and 250°, more preferably from 5 to 30 minutes at a temperature between 150° and 200°C. It is preferred that the second stage cure be by heating the composition for from 15 minutes to 5 hours at 150° to 200°C, more preferably 30 minutes to 3 hours at 150 to 180°C. However this can vary widely depending on composition and the details of the overall procedure. In the usual commercial operation the two stages would be combined into a continuous heating of 30 minutes to 5 hours at 150 to 200°C, more preferably 30 minutes to 3 hours at 150 to 180°C. The temperatures are oven temperatures or equivalents.

To enhance the sealant's rubber-like properties it is preferred to use a mixture of a standard plastisol grade polyvinyl chloride resin together with a mass polymerized polyvinyl chloride resin. It is believed that some of the mass polymerized polyvinyl chloride resin has a low reactivity with the zinc ion. From this it may be seen that it is preferred to have within the halogenated resin a portion that is relatively reactive with the zinc ion, or other compound when the amines are used, together with a resin which may or may not be halogenated which is less reactive or has low reactivity with the compound. The balance between good electrical conductivity and good rubber-like qualities may be controlled by adjusting the ratio of the two resins rather than by adjusting the cure cycle. One of the halogenated resins would preferably be a polyvinyl chloride resin made by the emulsion polymerization of vinyl chloride, with a particle size of about a micron (0.25 to 5 microns) and the other resin may also be a polyvinyl chloride resin but one characterized by a large particle size, usually between 10 and 100 microns such as mass polymerized polyvinyl chloride resin.

The plasticizer is also an important element in providing superior gaskets. As stated earlier, the phthalate, phosphate and adipate esters may be used. Epoxidized oil plasticizers have to date yielded gaskets having similar rubber-like properties to those prepared with the preferred plasticizers but poor electrical conductivity. However post plasticization of a properly cured and electrically conductive system having the epoxidized oil plasticizer may improve the heat resistance of the finished sealant while providing better electrical conductivity.

A noteworthy characteristic of the preferred process is that the resistance at stage one i.e. the fluxing stage, is more than 5,000 ohms, and the electrical resistance after stage two is less than 100, more often less than 50 and most often less than 20 ohms.

It is to be understood that all values derived from tests are to be considered as determined as set forth in the Examples that follow. If testing procedures are not specifically enumerated in some instances they are to be understood to be in accordance with the determination of similar types of values in other instances in this application.

The invention is further illustrated in the following examples.

## EXAMPLE 1

The following ingredients were added to a dough (high shear) mixer in the order listed below and blended:

(1) Polyvinyl chloride     200 grams     25.2% by volume
    Resin (Diamond PVC 71 AH
    plastisol grade)

(2) Dioctyl phthalate     320 grams     57.3% by volume
    Plasticizer (Hatco
    Chemical Co)

(3)    Zinc stearate (Fisher    13 grams    2.1% by volume
Scientific)

(4)    Nickel flake (Novamet    780 grams    <u>15.5% by volume</u>
Div.of MPD Technology
Corp. Ni-HCA-1 thickness
1.2 microns, aspect
ratio 33/1)

Total 100.1% by volume =
100% by volume

The blended mass, which has the consistency of putty, was calendered between two sheets of release paper; the thickness of this calendered sheet was about .38 mm. A number of sheets were formed in this manner. Some of the sheets were cured for 0.5 hours at 160°F and others for 2.5 hours at 160°F in a circulating air oven.

The sheets which were cured for 0.5 hours were soft and flexible (Shore A hardness = 65 using ASTM D2240-75) but their electrical resistance was above 500,000 ohms.

The sheets which were cured for 2.5 hours were harder (Shore A hardness = 85 to 90), but had very low electrical resistance, 1-5 ohms. The electrical resistance was determined by placing the probes of a Triplett Model 630 D.C. ohm meter in contact with the surface of the cured sheet. The separation of the probes was about one inch (25 mm).

The shielding effectiveness of the sealant in the gasket form of Example 1 that had been cured to the first stage for 1/2 hour and then to the second stage which required the extra 2 hours for assurance of full conditioning cure was tested. For comparison the products sold commercially by Emerson & Cuming Division of W.R. Grace & Co. as ECCOSHIELD® SV conductive plastic gaskets and ECCOSHIELD® SVR conductive plastic gaskets were also tested. The insertion losses at a frequency of 9 GH$_z$ (gigahertz) were:

| Example 1 | 73 dB (decibel) |
|-----------|-----------------|
| SV | 80 dB |
| SVR | 62 dB |

The method of measuring shielding effectiveness was by a transmission line technique. A specimen was formed into a flat washer 0.5 mm thick and placed in a coaxial transmission line perpendicular to the walls and the direction of energy propagation; the shielding effectiveness of the washer material was then measured. A block diagram of a transmission line system for measuring the shielding effectiveness using a substitution method is as follows:

| SIGNAL GENERATOR | | SPECIMEN HOLDER | | VARIABLE ATTENUATOR | DETECTOR |

The system was first assembled and energized with the specimen holder removed (the dotted line is a section of coaxial cable which is substituted for the specimen holder), and the variable attenuator set so that the detector read a chosen value. The specimen holder (a coaxial holder with the washer-shaped specimen in place) was then substituted for the cable and the calibrated attenuator reduced until the same reading (voltage level) was obtained in the detector. The shielding effectiveness of the specimen was then the signal attenuation which was removed from the variable attenuator since the total attenuation was the same as without the specimen.

The electrical resistance was also tested for the SV conductive plastic gaskets and found to be about 5 ohms.

- 11 -

## EXAMPLE II

The procedure of Example I was repeated except the PVC resin was 100 grams plastisol grade resin (Diamond PVC 71 AH) and 100 grams mass polymerized polyvinyl chloride resin (Goodrich GEON 140 x 30).

The computation for the ingredients of Example II would be:

1. 520 grams of halogenated plastic = 82.5% by volume of the solids and liquids in the cured or the uncured sealant composition

The halogenated plastic is a halogenated resin and includes:

a) 100 grams plastisol grade PVC resin = 50% by weight of the halogenated resin excluding the plasticizer

b) 100 grams mass polymerized PVC resin = 50% by weight of the halogenated resin excluding the plasticizer

c) 320 grams plasticizer dioctyl phthalate = 62% by weight of the halogenated resin

2. 780 grams of electrically conductive particle = 15.5% by volume of the solids and liquids in the cured or the uncured sealant composition.

3. .13 grams of material chosen from the group consisting of zinc, zinc compounds and mixtures thereof = 2.1% by volume of the solids and liquids in the cured or the uncured sealant composition.

A sheet was prepared as in Example 1 and cured for 2 1/2 hours. This sheet was tested and found to have an electrical resistance of 6 ohms and a Shore A hardness of 85 to 90.

This sheet was aged for 10 days at 100°C and found to have a resistance of 4 ohms. The sheet was also aged at room temperature for 48 days and then tested and found to have a resistance of 8 ohms.

- 12 -

## EXAMPLE III

The procedure of Example I was repeated except 10 grams of plastisol (the PVC and the plasticizer), 0.02 grams of zinc powder (Fisher Scientific zinc metal powder/dust) was used in place of the zinc stearate and 73 grams of variant metal particles as indicated in Table I were used. In one another variation no zinc powder was used. The cure time was 55 minutes at 200°C.

### TABLE I

| Variation No. | Metal | Resistance in Ohms. |
|---|---|---|
| 1 | Nickel/chromium[x] | 5 |
| 2 | Nickel/chromium no zinc powder | 5,000,000 |
| 3 | Nickel/iron[xx] | about 5 from memory |

[x]80/20 nickel/chromium alloy (Alpha Division of Ventron Corp., Danvers, Ma.) 100 mesh powder.

[xx]80/20 nickel/iron alloy (Alpha Division of Ventron Corp., Danvers, Ma.) 100 mesh powder.

## EXAMPLE IV

The procedure of Example I was repeated except the quantity of the PVC was 5 grams, 85 grams of the zinc powder of Example III was used in place of the zinc stearate and the nickel and the plasticizer was varied as indicated in Table 2. The first stage cure to flux was by heating for 5 minutes at 200°C and then there was a storage of 2 weeks at room temperature followed by the second stage curing for 10 minutes at 200°C in an oven. The results are also recorded in Table 2.

### TABLE 2

| Plasticizer | Resistance after Stage 1 in ohms. | Resistance after Stage 2 in ohms. |
|---|---|---|
| 1 Dioctyl adipate (1) | 1,000 | 0.5 |
| 2 Octyl diphenyl phosphate (2) | 5,000 | 200 |

- 13 -

| 3 | Acetyl triethyl citrate (3) | 5,000 | 0.5 |
| 4 | Epoxidized triglyceride (4) | 1,000 | 10,000 |

(1) Rohm & Haas

(2) Santicizer 141 - Monsanto Co.

(3) Pfizer, Inc.

(4) Epoxol 9-5 from Swift Specialty Chemicals

After the first stage cure the gaskets were soft and pliable. After the second stage cure the gaskets were harder and stiffer and not as desirable for most gasketing uses as the gaskets of Example I.

EXAMPLE V

The procedure of Example I was repeated except 15.5 grams of PVC, 24.5 grams of DOP and 60.0 grams of nickel were used and a polyamide in varying amounts as indicated in Table 3 was used in place of the zinc stearate. The polyamide was a medium viscosity liquid fatty amino amide which was a dimerized fatty acid reacted with an aliphatic polyamine.

TABLE 3

| Variation No. | Quantity of Amide in grams. | Resistance in ohms. | Uniformity of needle movement |
|---|---|---|---|
| 1 | 0.7 | 200-500 | Erratic |
| 2 | 1.0 | 1000-5000 | Erratic |
| 3 | 1.52 | 10,000 | |
| 4 | 2.0 | 10,20 and 30 | |
| 5 | 2.5 | 30,75,100 | Very erratic |

The variations were formed into small patties about 3.8 cm in circumference and .3 cm thick uncured in aluminium cups and cured in an oven for 25 minutes at 160°C, room temperature for 10 minutes and then in a second oven for 20 minutes at 200°C. The resistance was measured and the results were recorded as above. Variant readings are from different sections of a patty.

- 14 -

## EXAMPLE VI

The procedure of Example I was repeated and the materials were from the same sources except titanium powder (Alpha Division of Ventron Corp. Danvers, Ma). replaced the nickel flake and the recipe was as follows:

|  | Weight | Density | Volume | Volume % |
|---|---|---|---|---|
| Titanium Powder | 73 | 4.507 | 16.20 | 39.57 |
| Polyvinyl Chloride resin | 10 | 1.40 | 7.14 | 17.44 |
| Dioctyl Phthalate | 17 | 0.986 | 17.24 | 42.11 |
| Zinc Stearate | 0.4 | 1.10 | 0.36 | 0.88 |
|  | 100.4 |  | 40.94 | 100.00 |

In addition the curing and the results of curing were different from that of Example I as follows:

(1) A sheet was fluxed for 20 minutes at 160°C and on testing yielded a hardness, Shore A, of 65 and an electrical resistance of 200 ohms.

(2) Another sheet was fluxed (and heated further) for a total of 2 1/2 hours at 160°C and on testing yielded a hardness, Shore A, of 90 and an electrical resistance of 20 ohms.

## EXAMPLE VII

The procedure of Example I was repeated and the materials were from the same sources except carbon black (Schawinigan acetylene black, Schawinigan Products) replaced the nickel flake and the zinc powder of Example III replaced the zinc stearate and the recipe was as follows:

| Carbon Black | 14 grams |
|---|---|
| Polyvinyl Chloride Resin | 100 |
| Dioctyl Phthalate | 150 |
| Zinc Powder | 5 |

In addition the curing and the results of curing were different from that of Example I as follows:

- 15 -

(1) A sheet was fluxed for 5 minutes at 200°C
   and on testing yielded a very high electrical
   resistance.

(2) A sheet was fluxed for 10 minutes at 200°C
   and on testing yielded an electrical
   resistance of 5,000 ohms.

EXAMPLE VIII

The procedure of Example VII was repeated and
the materials were from the same sources except silver
replaced the carbon black and the recipe was as follows:

Silver *                       60 grams
Polyvinyl Chloride resin   15.5
Dioctyl Phthalate          24.5
Zinc Powder                1

* The silver had the following analysis

% through 325 medium screen = 98.6%
density of 1.32 grams/cu cm
99.97% silver
0.0008% copper
0.02% iron

In addition the curing and the results of curing
were different from that of Example VII as follows:

Two different sheet thicknesses were made.
One was approximately 0.075 mm thick and the other was
approximately 0.5 mm thick varying from 0.3 to 0.7 mm.
The 0.075 microns thick sheet was heated for 25 minutes
at 160°C and after a 10 minute delay at 200°C for 20
minutes and on testing yielded an electrical resistance
of 5 ohms. The 500 microns thick sheet was heated for
50 minutes at 160°C and found on testing to have an
electrical resistance of 1,000 to 50,000 ohms. The
thinner areas appeared to give the lower electrical
resistances. On further heating after a delay of about
one week the sheet was found to still have a high electrical
resistance. The high resistance obtained with the thick
silver filled gasket is unexplained and it is still

- 16 -

believed with proper procedure, results comparable to Examples I through VII would be obtained as shown by the results with the thinner sheet.

### EXAMPLE IX

The procedure of Example I was repeated and the materials were the same except where indicated in the recipe as follows:

Two master batches were made that were free of the electrically conductive particle and then various electrical conducting particles were added as designated below.

| | Master Batch I (MBI) Parts by weight | Master Batch II (MBII) Parts by weight |
|---|---|---|
| Polyvinyl chloride Resin | 75 | 25 |
| Polyacrylate Resin (Rohn 4893-F) | 25 | 75 |
| Dioctyl Phthalate | 150 | 150 |
| Zinc Stearate | 6 | 6 |

Table 4 gives the additions of electrically conductive particle and designates whether the curing was by Procedure 1 or Procedure 2.

Procedure 1 involved:

| Sequence Letter | |
|---|---|
| a | heat for 10 minutes at 160°C |
| b | cool for 10 minutes at room temperature |
| c | heat for 20 minutes at 200°C |
| d | cool to room temperature and test |
| e | heat for 15 minutes at 170°C |
| f | cool for 10 minutes at room temperature |
| g | heat for 30 minutes at 200°C |
| h | cool to room temperature and test |

Procedure 2 involved:

Sequence letter

| | |
|---|---|
| a | heat for 30 minutes at 160°C |
| b | cool to room temperature and test |
| c | heat for 30 minutes at 170°C |
| d | cool to room temperature and test |
| e | heat for 25 minutes at 170°C |
| f | cool to room temperature and test |
| g | heat for 20 minutes at 200°C |
| h | cool to room temperature and test |

### TABLE 4

| Variation No. | (MB#) and amount of grams | | Electrical Resistance in Ohms Procedure 1 | |
|---|---|---|---|---|
| | | | d | h |
| 1 | (MBI) | 2.56 | 20,000 | 100-300 |
| | Nickel of Example 1 | 3.84 | | |
| 2 | (MBI) | 1.28 | | |
| | (MBII) | 1.28 | | |
| | Nickel of Example 1 | 3.84 | 20,000 | 100 |
| 3 | (MBII) | 2.56 | | |
| | Nickel of Example 1 | 3.84 | 20,000 | 1000 |

Procedure 2

| Variation No. | (MB#) and amount of grams | | b | d | f | h |
|---|---|---|---|---|---|---|
| 4 | (MBII) | 2.56 | No[x] | 20 Mega | 20 Mega | 500,000 |
| | Brass Powder[x] | 2.01 | | | | |
| 5 | (MBII) | 2.56 | continued essentially non-conductive | | | |
| | Stainless Steel[xx] | 1.56 | | | | |
| 6 | (MBII) | 2.56 | continued essentially non-conductive | | | |
| | Copper[xxx] | 1.83 | | | | |

x essentially non-conductive

[x]Brass powder was Richgold 8620 from United States Bronze Powder Inc.

[xx]Stainless steel was Stay-steel 316 from United States Bronze Powder Inc.

[xxx]Copper was 126U from Atlantic Powdered Metals, Inc.

- 18 -

The conductive particles of this Example were tested in other variations with substantially the same results.

The high resistance obtained with the brass powder, stainless steel and copper is not understood and may be overcome with further experimental work.

A number of terms deserve special attention. Among these is the term "rubber-like" by which is meant a product having properties similar to natural rubber, i.e., when moderately deformed by extension or depression it recovers its original form when the applied force is removed. Such a material when trapped tightly between two rigid members gives a good hermetic seal. By "hermetic seal" it is meant a seal which is an effective barrier to fluids, both liquids such as water and gases such as air.

The term "fluxing" refers to the heating process in which the polyvinyl chloride particles absorb plasticizer and then melt and coalesce, forming a continuous rubber film upon cooling.

The term "electrical conductivity" refers to the ability to conduct electricity both along the surface of and through the conductive gaskets. This is generally measured by measuring the electrical resistance, which is the inverse of electrical conductivity.

In this regard it should be pointed out that the main present intended use of the sealant is RF (Radio Frequency) shielding. In general the electrical conductivity of a material such as the sealants of the present invention is measured by the method given in Example I.

The term "sealant" means a gasket or caulking or similarly functioning material.

The term "plastic" means resin, a resin mixture, a resin/rubber mixture, or a rubber and includes the plasticizer in plasticized compositions.

- 19 -

The term "electrically conductive particle" means a particle derived from a metal or a non-metal which conducts electricity.

The term "cured" means (unless otherwise specified by the context of its use) changing, by at least a doubling of, the electrical conductivity of the uncured composition as measured by reducing to at least one half the electrical resistance of the composition.

When it is said that there is a resin/filler reaction it is meant the reaction of whatever nature that changes the filled plastic having the high resistivity to low resistivity as shown in this invention. The phrase is an indication of the believed mechanism.

The present invention provides many advantages. One of the most important advantages of the present sealant is that many additional combinations of materials can be used to form excellent EMI (Electro Magnetic Interference) and RFI (Radio Frequency Interference) sealants. This makes such sealants available for wider applications in simple forms. Other advantages have been previously mentioned such as allowing the use of less expensive materials.

C L A I M S

1.      A composition comprising about 5 to about 99% by volume of halogenated plastic, about 1 to about 95% by volume of electrically conductive particles and about 0.001 to about 30% by volume of material chosen from zinc, zinc compounds, amide and amine compounds and mixtures thereof, with the proviso that the said electrically conductive particles can be the same as the said material.

2.      A composition according to claim 1, wherein the said electrically conductive particles comprise nickel, platinum, chromium, zinc, iron, titanium, cobalt, aluminum or carbon.

3.      A composition according to claim 1 or 2, wherein the halogen in the said halogenated plastic is chlorine or bromine and the said material is a zinc salt or a polyamide.

4.      A composition according to any of claims 1 to 3, the said halogenated plastic is present in an amount of about 20 to about 97% by volume and comprises a halogenated vinyl resin, the said electrically conductive particles are present in an amount of about 2 to about 80% by volume, and the said material is present in an amount of about 0.0005 to about 20% by volume.

5.      A composition according to claim 4, consisting essentially of about 40 to about 95% by volume of a halogenated vinyl plastisol resin having a plasticizer content of about 25 to about 85% by weight based on the plastisol weight, and about 5 to about 60% by volume of the electrically conductive metallic particles.

6.    A composition according to claim 5, wherein the said halogenated resin is a polyvinyl chloride or polyvinyl chloride copolymer resin and is present in an amount of about 50 to about 90% by volume and contains a plasticizer chosen from butyl, hexyl, octyl, decyl and dodecyl esters of phthalic, trimellitic, adipic and phosphoric acids, citrate esters and sulfonamides or mixtures thereof, the said plasticizer being present in an amount of about 30 to about 80% by weight based on the weight of the halogenated resin plastisol, the said electrically conductive particles are free of silver and gold and comprise zinc, nickel and mixtures thereof, and the said material is a zinc or a zinc salt and is present in an amount of about 0.02 to about 10% by volume.

7.    A composition according to claim 6, wherein the polyvinyl chloride or polyvinyl chloride copolymer resin includes 20 to 65% by weight of mass polymerized polyvinyl chloride resin based on the weight of the resin excluding the plasticizer, the said metal is nickel, and the said material is zinc stearate.

8.    A composition according to claim 6, wherein the polyvinyl chloride or polyvinyl chloride copolymer resin includes a plasticizer in an amount of about 40 to about 75% by weight based on the resin weight, the electrically conductive particles and the said material are zinc, and the zinc is present in an amount of about 10.02 to about 60% by volume.

0038679

9.     An electrically conductive gasket made of a
composition as claimed in any of claims 1 to 8.

10.     A method of forming a seal or other shaped
structure which comprises shaping a composition as
claimed in any of claims 1 to 8 and curing said
composition until its electrical conductivity at least
doubles.

11.     A method according to claim 10, wherein the
said composition comprises a plastisol and the composition
is first fluxed and subsequently cured to at least
double its electrical  conductivity.

12.     A method according to claim 10 or 11, wherein the
said curing includes heating the said composition for
about 15 minutes to about 5 hours at about 150 to about 350$^{\circ}$C.

13.     A method according to claim 10, 11 or 12, wherein
the electrical resistance after curing is less than
one fiftieth of the resistance before curing.

14.     An electrically conductive gasket produced by
the method of any of claims 10 to 13.

0038679

European Patent Office

**EUROPEAN SEARCH REPORT**

Application number

EP 81301677.1

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>US - A - 3 867 315</u> (TIGNER)<br>-- | 1,3,4 | H 01 B 1/20 |
| X | <u>US - A - 3 919 122</u> (TIGNER)<br>& DE-A1-2 406 082<br>& GB-A -1 455 513<br>-- | 1,4 | |
| X | <u>DE - A - 1 805 353</u> (ESSO)<br>  + Page 4, lines 15-22; claims 1,2 +<br>& US-A-3 709 835<br>-- | 1,2,4 | |
| X | <u>FR - A - 2 264 369</u> (GRUZINSKY)<br>  + Claim 3 +<br>-- | 1 | **TECHNICAL FIELDS SEARCHED** (Int. Cl.³)<br><br>H 01 B 1/00<br>H 01 B 5/00<br>H 01 B 9/00 |
| P | <u>US - A - 4 230 604</u> (WINGRAVE)<br>(28-10-1980)<br>---- | 1,3 | C 08 L 27/00<br>C 08 K 3/00<br>C 08 K 5/00<br>H 05 K 9/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>03-07-1981 | Examiner<br>KUTZELNIGG | |

EPO Form 1503.1 06.78